# EUROPEAN PATENT APPLICATION

(11) **EP 2 052 826 A2**
(43) Date of publication of application: **29.04.2009**
(21) Application number: 08017866.8
(22) Date of filing: 11.10.2008
(51) Int. Cl.: B29B 13/06, F26B 17/20, F26B 3/30

(54) **Infrared dehumidifier**

(30) Priority: 25.10.2007 IT VE20070080
(71) Applicant: Piovan S.P.A., 30036 Santa Maria Di Sala (IT)
(72) Inventor: Bellio, Enrico, 30036 S. Maria di Sala (VE) (IT)
(74) Representative: Vinci, Marcello

(57) **Abstract**

The invention concerns a new infrared dehumidifier comprising at least one hollow drum (B) that rotates or oscillates around its own main axis, with one or more infrared heating lamps (C) arranged inside said drum.

## Description

The present patent relates to the sector of the equipment for processing plastic materials and in particular it concerns a new type of infrared dehumidifier.

At present various different processes are used for the manufacture of finished and semi-finished products in plastic materials, the most common of which are injection moulding, blow moulding and extrusion.

In order to ensure the good quality of the finished and semi-finished products, it is necessary to avoid the presence of humidity in the granules and for this reason, before conveying the granulated material into the plasticizing screw, it is necessary to make it pass through a dehumidifier.

Infrared dehumidifiers are known, that is, devices suited to eliminate or reduce the humidity present in the material by means of infrared heating lamps. Said infrared dehumidifiers comprise at least one material feed duct, at least one material outflow duct, and a container communicating with said feed and outflow ducts, the inside of which is provided with a screw, preferably with increasing pitch, and with one or more infrared heating lamps positioned inside said container and integral with it.

Said screw rotates around its own axis, in such a way as to allow the material to move forward; in this way the material, thanks to the action of the infrared heating lamps, is heated, dehumidified and prepared for the successive processing step.

In order to improve the reliability of this process, a new type of infrared dehumidifier has been studied and constructed.

The new infrared dehumidifier, in its main parts, comprises at least one support frame, at least one drum positioned on said support frame, and one or more infrared heating lamps, arranged inside said drum and having the function of dehumidifying and preheating the material.

Said drum is hollow, rotates around its substantially horizontal main axis, and is provided with a series of projections on its inner surface.

The material passes through said drum, remaining therein for a time sufficient to allow it to be dehumidified by the infrared heating lamps.

According to a possible embodiment of the invention, said drum is substantially cylindrical in shape and rotates around its own axis, thanks to the presence of one or more guides, positioned outside said drum, and of motion transmission devices.

In a different embodiment of the invention, the cross section of said drum has the shape of an arc of a circle, and is positioned inside said support frame, so that the open portion of said drum faces upwards. Differently from the previous solution, said drum does not perform a 360° rotation, but oscillates, that is, rotates partially in an alternate pattern around its main axis. In the preferred embodiment of the invention, said projections are substantially linear and arranged longitudinally on the inner surface of said drum, or, in an another solution, are arranged in a helical pattern, in order to favour the advance of the material towards the outlet.

Said support frame comprises at least one material feed duct and at least one duct for the outflow of the material towards the processing machines or the storage systems, and one or more moving elements or hinges suited for closing or opening said drum.

Said closing or opening elements, if necessary, can be equipped with one or more translating guides in order to ensure easy access to said drum and facilitate maintenance operations.

Said moving elements that close or open the drum are constructed in such a way as to allow maintenance and replacement of the infrared heating lamps to be carried out.

Thus, the granulated material passes through the feed duct and is introduced in said drum, where said infrared heating lamps provide for dehumidifying it. The oscillating movement of said drum makes it possible to expose a larger surface of material to the dehumidifying action of said heating lamps. The granules treated in this way advance towards said outflow duct, in order to be conveyed towards the machines that will process the material.

If necessary, the invention may include an inclination device applied to said support frame, that is, a device suited to raise one side of said support frame or of said drum, in such a way as to incline said drum and thus favour the advance of the material towards the outflow duct.

The inclination of the support frame, by means of said inclination device, can be adjusted and can be interrupted when necessary, thus ensuring better regulation of the advance of the material through the drum.

The main advantage offered by the new infrared dehumidifier lies in that access to the drum is facilitated by the presence of said moving elements that open or close the drum.

Said drum is preferably cylindrical in shape but can have any other suitable cross section, for example oval or elliptic, in any case rotating on a guide.

These and other direct and complementary objects have been achieved through the construction of the new infrared dehumidifier.

Infrared dehumidifier comprising at least one rotary hollow drum, the inside of which is provided with one or more infrared heating lamps.

The characteristics of the new infrared dehumidifier will be highlighted in greater detail in the following description, with reference to the drawings attached as non-limiting examples.

Figure 1a shows one possible embodiment of the new infrared dehumidifier, while Figure 1b shows a section view of the same embodiment of the new infrared dehumidifier.

Figure 2 diagrammatically shows another embodiment of the new infrared dehumidifier with a device for inclining one side of said support frame.

Figure 3a shows the cross section of a possible embodiment of the drum of the new infrared dehumidifier, while Figure 3b shows the cross section of a further embodiment of the drum of the new infrared dehumidifier.

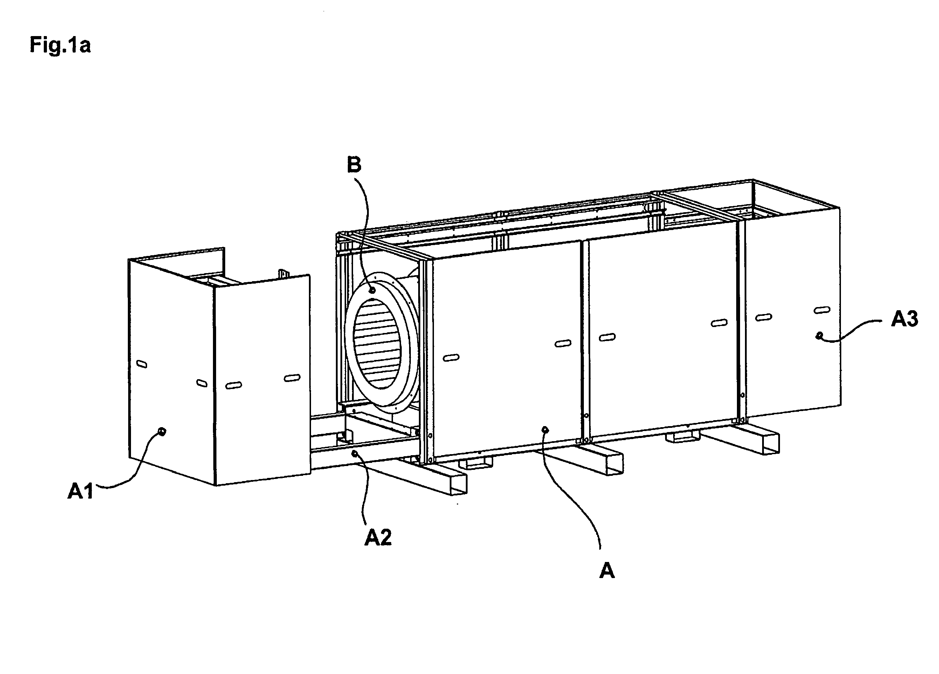

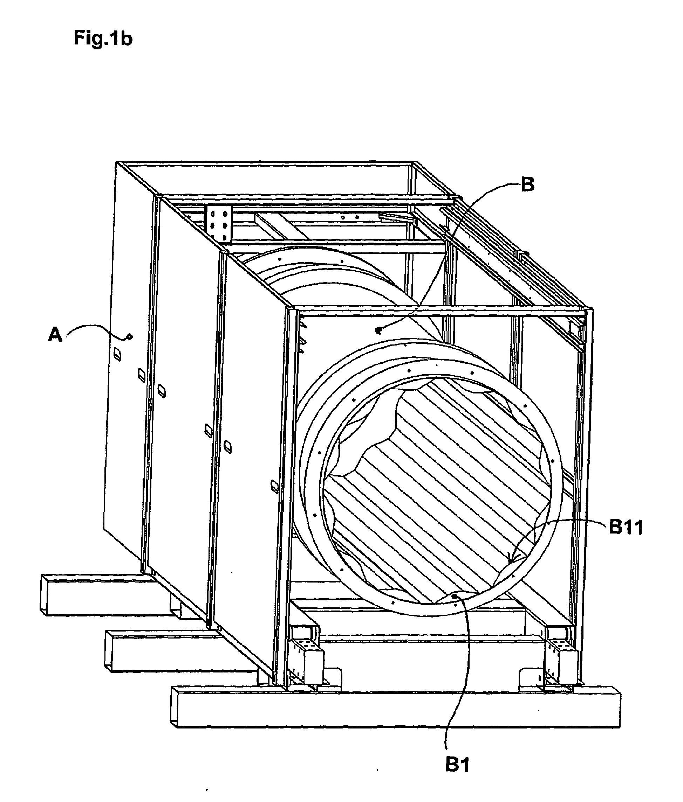

With reference to Figures 1a and 1b, the new infrared dehumidifier comprises, in its main parts, at least one support frame, at least one drum, connected to and positioned inside said support frame, and one or more infrared heating lamps arranged inside said drum and having the function of dehumidifying and preheating the material.

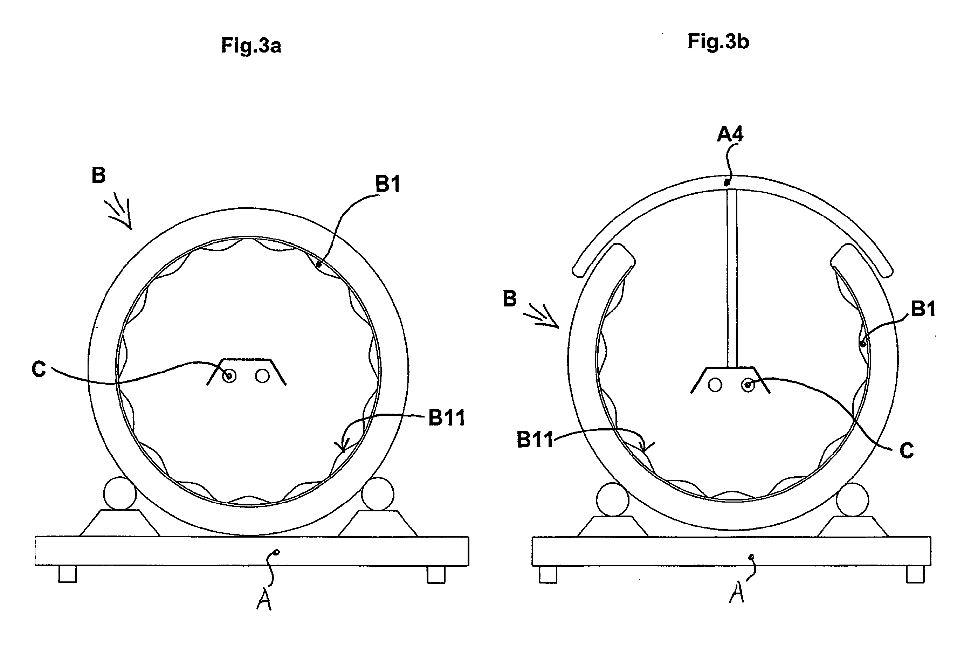

According to a possible embodiment of the invention as illustrated in Figure 3a, said drum is substantially cylindrical, hollow, with open bases and substantially horizontal rotation axis, and on its inner surface there is a series of longitudinal projections (B1) spaced at regular intervals. Furthermore, said drum (B) comprises on its outer surface one or more guides, suited to allow said drum (B) to rotate.

Said projections (B1), in this case, are constituted by substantially linear elements, their outer surface (B11) is convex and their inner surface is contiguous and integral with the inner surface of said drum (B).

Said projections (B1) are made integral with said rotary drum by means of one or more fixing elements like screws or bolts.

Said support frame (A), in this case substantially parallelepiped in shape, comprises at least one material feed duct, at least one duct for the outflow of the material towards the resin processing machines and at least two moving elements (A1, A3) for closing or opening the drum (B), provided with translating guides (A2) in order to facilitate maintenance operations.

Each one of said moving elements (A1, A3) for closing or opening the drum (B) is arranged at the level of each one of the open bases of said rotary drum (B).

In particular, one of said closing or opening elements (A1) communicates with said material feed duct, while the second one (A3) communicates with said outflow duct. In the preferred embodiment of the invention, said infrared heating lamps (C) are fixed to said closing or opening elements (A1, A3) through fixing elements like screws or bolts.

Thus, the granulated material passes through the feed duct in order to be introduced in said rotary drum (B), where said infrared heating lamps (C) provide for dehumidifying it. The rotary motion of said drum (B) makes it possible to expose a larger surface of the material to the dehumidifying action of said heating lamps (C). The granules treated in this way are successively conveyed to the machines that provide for processing the resin.

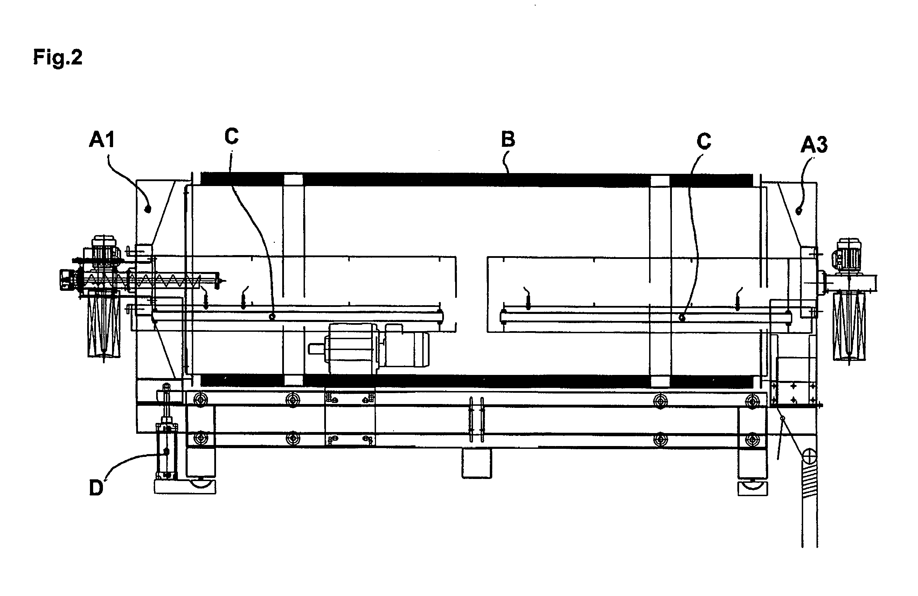

With reference to Figure 2, the invention may comprise at least one device (D) for inclining one side of said support frame (A), that is, a device suited to raise the side of the support frame (A) where the material flows in, in such a way as to incline said drum (B) and thus favour the advance of the material inside it towards the outflow duct. The inclination of the support frame (A) by means of the inclination device (D) can be adjusted and can be interrupted when necessary, thus ensuring better regulation of the advance of the material through the drum.

In this case said inclination device (D) consists of a hydraulic piston.

With reference to Figure 3b, a further embodiment of the drum (B) of the new infrared dehumidifier can be carried out. Said drum (B), with cross section in the shape of an arc of a circle, is positioned inside said support frame (A), so that the open portion of said drum (B) faces upwards. Differently from the previous solution, said drum does not perform a 360° rotation, but oscillates, that is, rotates partially in an alternate pattern around its main axis. The closing element (A4) of the open portion of the drum (B), in this case, is constituted by an element substantially in the shape of an arc of a circle, positioned above said drum (B) and integral with said support frame (A), in such a way as to allow the relative oscillating movement of said drum (B) in relation to said closing element (A4). Said infrared heating lamps are connected to said closing element (A4) by means of one or more rods.

Therefore, with reference to the above description and the attached drawings, the following claims are expressed.

## Claims

1. Infrared dehumidifier, **characterized in that** it comprises at least one hollow drum (B) that rotates or oscillates around its own main axis, and **in that** it comprises one or more infrared heating lamps (C) arranged inside said drum.

2. Infrared dehumidifier according to claim 1, **characterized in that** the inner surface of said drum (B) comprises a series of projections (B1).

3. Infrared dehumidifier according to claims 1, 2, **characterized in that** said projections (B1) comprise a convex surface (B11).

4. Infrared dehumidifier according to claims 1, 2, 3, **characterized in that** said drum (B) is substantially cylindrical, with open and/or openable bases.

5. Infrared dehumidifier according to claims 1, 2, 3, 4, **characterized in that** the cross section of said drum (B) is in the shape of an arc of a circle and **in that** it oscillates in relation to its own main axis.

6. Infrared dehumidifier according to claims 1, 2, 3, 4, 5, **characterized in that** it comprises an inclination device (D) directly or indirectly applied to said drum (B), in such a way as to allow one side of said drum (B) to be raised in order to regulate the advance of the material.

7. Infrared dehumidifier according to claim 6, **characterized in that** said inclination device (D) consists of a hydraulic piston.

8. Infrared dehumidifier according to claims 1, 2, 3, 4, 5, 6, **characterized in that** it comprises a support frame (A) suited to contain and support said drum (B).
